# EUROPÄISCHE PATENTSCHRIFT

(11) **EP 0 539 716 B1**
(45) Veröffentlichungstag und Bekanntmachung des Hinweises auf die Patenterteilung: **14.12.1994**
(21) Anmeldenummer: 92116010.7
(22) Anmeldetag: 18.09.1992
(51) Int. Cl.: A22C 25/14, A22C 25/08

(54) **Anlage zum Bearbeiten von Flachfischen**
Apparatus for processing flat fish
Appareil de traitement de poissons plats

(30) Priorität: 26.10.1991 DE 4135353
(43) Veröffentlichungstag der Anmeldung: 05.05.1993
(73) Patentinhaber: NORDISCHER MASCHINENBAU RUD. BAADER GMBH + CO KG, 23560 Lübeck (DE)
(72) Erfinder: Evers, Reinhard, W-2406 Stockelsdorf (DE); Torkler, Conrad, W-2411 Hakendorf (DE); Götz, Klaus-Werner, W-2406 Stockelsdorf (DE)

(56) Entgegenhaltungen:
- BE-A- 673 054
- DE-A- 1 292 818
- DE-A- 1 579 417
- DE-C- 492 627
- FR-A- 1 432 560
- GB-A- 1 376 624
- GB-A- 1 518 267
- GB-A- 2 100 578
- US-A- 1 920 339
- US-A- 2 507 808
- US-A- 3 380 114

## Beschreibung

Die Erfindung geht aus von einer Anlage zum Bearbeiten von Flachfischen, insbesondere zum Abtrennen des Kopfes, eventuell des Schwanzes und/oder Ausführen ähnlicher Arbeitsschritte, umfassend eine Beschickeinrichtung, Mittel zum Ausrichten der Fische in die jeweils erforderliche Bearbeitungslage sowie Mittel zum Befördern der Fische in Seitenlage durch den Wirkbereich der entsprechenden Bearbeitungswerkzeuge hindurch, die längs der Bahn der Fördermittel angeordnet sind.

Eine derartige Anlage ist aus dem praktizierten Stand der Technik bekannt, der z. T. in Form der Schutzrechte DE-PS 1 292 818 und DE-PS 1 579 417 druckschriftlich belegt ist. Gegenstand dieser Druckschriften ist eine Vorrichtung zum Köpfen und Filetieren von Flachfischen, wobei die zweitgenannte eine Beschickeinrichtung zeigt, die neben der Aufgabe der getakteten Weitergabe der Fische die der Ausrichtung derselben für die Weitergabe hat. Dabei wird der in Längsrichtung aufgegebene Fisch getaktet in den Bereich einer Ausrichtstation gebracht, in der die Ausrichtung durch Zusammenwirken eines Kopffängers und mit diesem kinematisch gekoppelten Fischschiebern bewirkt wird und anschließend eine getaktete Übergabe in einen Schwanzklammer-Förderer erfolgt, der die Fische durch eine Filetiermaschine nach der DE-PS 1 292 818 fördert.

In der US 2 507 808 ist weiter eine Einrichtung zur Kopflageneinstellung von Fischen offenbart, die in Seitenlage quer zu ihrer Längsachse vorgeschoben werden. Diese Einrichtung umfaßt eine Verschiebeeinheit zum Vorschieben jedes Fisches in seine Köpflage. Die Verschiebung erfolgt durch eine an der rumpfseitigen Kante des Schultergürtelbogens sich abstützenden Mitnehmer, nachdem dieser mit der Flanke des Fisches in Kontakt gebracht und auf dieser zum Kopf hin gleitend geführt wurde. Die Verschiebung wird durch Aussteuern des Mitnehmers außer Kontakt mit dem Fisch bei Erreichen der gewünschten Köpflage beendet. Eine Förderung der Fische durch den Wirkbereich der Bearbeitungswerkzeuge erfolgt mittels der Verschiebeeinrichtung nicht.

Das Abtrennen des Kopfes ist beispielsweise aus der DE-PS 23 49 660 entnehmbar, welche Druckschrift eine Vorrichtung zeigt, die den Kopf durch einen beim Flachfisch üblichen, die Bauchhöhle zum größten Teil miterfassenden Winkelschnitt entfernt wird.

Diese bekannten Einrichtungen genügen zum einen den heutigen Anforderungen an die Durchsatzleistung nicht mehr, zum anderen läßt die erreichbare Präzision zu wünschen übrig, was gleichbedeutend ist mit einem heute nicht tragbaren Ausbeuteverlust, zu dem auch die Schnittform des Köpfschnitts beiträgt.

Es wurde nun gefunden, daß ein Ausbeutegewinn durch einen in einer Ebene geführten Köpfschnitt erreichbar ist, wenn dabei eine ganz bestimmte, die anatomischen Gegebenheiten berücksichtigende Winkellage zur Längsachse und größenabhängige Position in bezug auf die Längslage eingehalten wird.

Es ist daher die Aufgabe der Erfindung, eine Anlage vorzuschlagen, die einen derartigen Schnitt ermöglicht und Gewähr dafür bietet, daß jeder Fisch unabhängig von seiner Größe in optimaler Lage durch den Bearbeitungsprozeß hindurchführbar ist.

Diese Aufgabe wird bei einer Anlage der genannten Art dadurch gelöst, daß die Fördermittel zum Befördern der Fische durch den Wirkbereich der Bearbeitungswerkzeuge hindurch mindestens einen Mitnehmer aufweisen, welcher jeweils mit dem zu bearbeitenden Fisch durch formschlüssigen Angriff an seiner der Auflagefläche gegenüberliegenden Flanke in Kontakt tritt, wobei jeder Mitnehmer um eine zu der Auflagefläche im wesentlichen senkrechte Achse drehsteuerbar und im Verhältnis zu der Auflagefläche abstandssteuerbar ausgebildet ist.

Die damit erzielbaren Vorteile bestehen insbesondere in der Möglichkeit der präzisen Lagesteuerung und dabei hohen Durchsatzleistung und letztendlich darin, daß eine Übergabe der Fische an nachgeschaltete Bearbeitungsmaschinen, vornehmlich an eine Filetiermaschine, in jeder gewünschten Lage und in dieser wiederholgenau erfolgen kann.

Eine kompakte Bauweise der Anlage ergibt sich dabei dadurch, daß jeder Mitnehmer des Fördermittels mit konstanter Geschwindigkeit auf einer Kreisbahn geführt und an einem im Bereich der Beschickeinrichtung befindlichen definierten Punkt der Kreisbahn absenkbar ist.

Eine in sicherheitstechnischer und ergonomischer Hinsicht vorteilhafte Ausführung sieht vor, daß die Beschickeinrichtung mit einer die zu bearbeitenden Fische aufnehmenden und nach Längslage ausgerichtet bereitstellenden Beschickstation ausgestattet ist und Mittel zum getakteten Freigeben der Fische aus dieser umfaßt. Dabei kann sich an die Beschickstation ein Zubringerförderer anschließen, der die im Takt zum Umlauf der Mitnehmer freigegebenen Fische in Längsrichtung formschlüssig fördernd übernimmt und dessen Förderbahn zu der Kreisbahn der Mitnehmer des Fördermittels tangential oder radial verläuft.

Um sicherzustellen, daß jeder Fisch unabhängig von seiner Größe an einem für die vorgesehene Bearbeitung einheitlichen Bezugspunkt seines Körpers durch den Mitnehmer des Fördermittels erfaßt wird, kann im Bereich des Zubringerförderers eine Tasteinrichtung zum Ertasten eines markanten Längenmaßes des von dem Zubringerförderer erfaßten Fisches vorgesehen und die Geschwindigkeit des Zubringerförderers in Abhängigkeit von dem durch die Tasteinrichtung jeweils ermittelten Meßwert geregelt sein. Als Ort für die Erfassung jedes Fisches durch den jeweiligen Mitnehmer eignet sich der Tangentenpunkt bzw. der Kreuzungspunkt zwischen der Bahn des Zubringerförderers und der der Mitnehmer.

Die Wahl des Erfassungspunktes der Fische durch die Mitnehmer und eine Steuerbarkeit des Drehwinkels derselben während des Angriffs am Fisch erfordert lediglich für das Bearbeitungswerkzeug zum Abtrennen des Schwanzes eine indiviuelle Steuerbarkeit bezüglich dessen Abstand zu der Bahn der Mitnehmer, was unter Verwertung des von der Tasteinrichtung ermittelten Meßwertes geschehen kann. Das Bearbeitungswerkzeug zum Abtrennen des Kopfes kann dagegen gestellfest angeordnet sein.

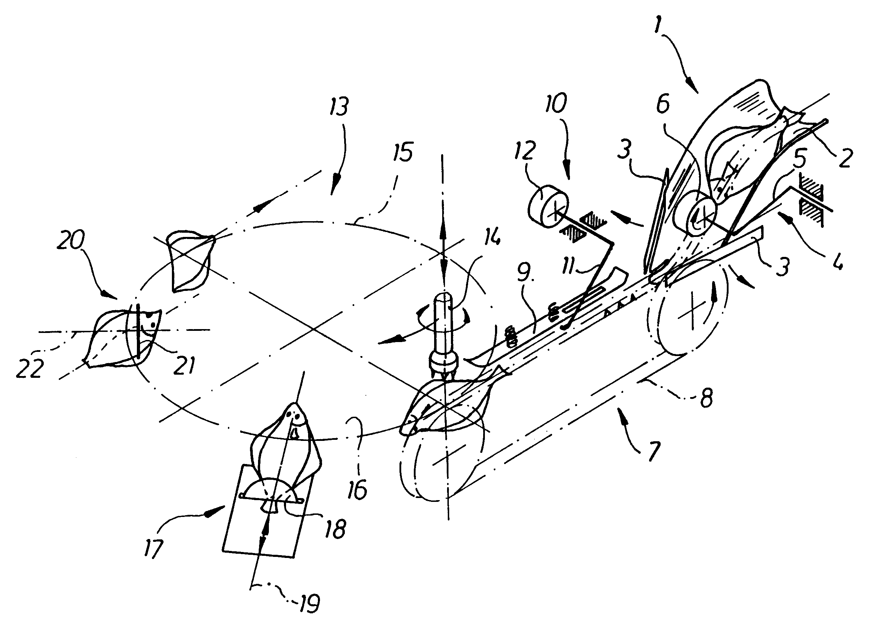

Die erfindungsgemäße Anlage wird nachstehend anhand eines in der Zeichnung dargestellten Ausführungsbeispiels näher erläutert.

Die einzige Figur zeigt den schematischen Aufbau einer nach der Erfindung arbeitenden Anlage in axonometrischer Darstellung.

Sie weist an der Eingangsseite eine Beschickeinrichtung 1 mit einer geneigten Zuführrutsche 2 auf, die in ihrem Querschnitt so strukturiert ist, daß der Fisch unter Längsausrichtung mittig geführt herabgleitet. Im Endbereich der Zuführrutsche 2 befindet sich ein Paar auf geeignete Weise schwenkbetätigbarer Fangklappen 3, die symmetrisch zur Mitte der Zuführrutsche 2 unter V-förmiger Stellung in Beschickrichtung konvergierend angeordnet sind und in Ruhestellung lediglich einen verengten Durchlaß belassen, der klein genug ist, den kleinsten zur Verarbeitung gelangenden Flachfisch zurückhalten. Der V-Winkel der Fangklappen 3 ist an die Anatomie des Kopf- und daran angrenzenden Rumpfbereiches der Fische angepaßt. Über der Zuführrutsche 2 ist eine Takteinrichtung 4 angeordnet. Diese umfaßt eine an einer Schwinge 5 gelagerte, umlaufend angetriebene Förderwalze 6 , die durch ein geeignetes Stellglied taktweise auf den in der Zuführrutsche 2 bereitliegenden Fisch absenkbar ist, wobei gleichzeitig die Fangklappen 3 ausgesteuert werden.

An die Zuführrutsche 2 schließt sich ein Zubringerförderer 7 an. Er besteht aus einem angetriebenen unteren Endlos-Kettenförderer 8 und einem über diesem befindlichen, federnd nach oben verdrängbaren Niederhalter 9 . Der Kettenförderer 8 umfaßt zwei parallel laufende Ketten, die beispielsweise durch Bestückung mit Zähnen griffig ausgestaltet sind. Der Niederhalter 9 weist einen Durchbruch auf, durch den eine Tasteinrichtung 10 mit einem Tasthebel 11 in die Bahn der Fische hindurchragt, mit dessen Schwenkachse ein Winkelcodierer 12 verbunden ist. Der Antrieb des Kettenförderes 8 erfolgt durch einen Schrittmotor.

Der Kettenförderer 8 reicht bis in den Wirkbereich eines lediglich angedeutet dargestellten Fördermittels 13 , das aus einem Mitnehmerkarussel mit beispielsweise fünf Mitnehmern 14 besteht, die in einer horizontalen Kreisbahn 15 kontinuierlich in Fortsetzung der Bewegungsrichtung des Zubringerförderers 7 umlaufen. Die Mitnehmer 14 werden über einer Auflagefläche 16 für die Fische bewegt, die sich in der Ebene des Obertrums des Kettenförderers 8 erstreckt und sind während ihres Umlaufs in vertikaler Richtung steuerbar, wobei die Absenkung der einzelnen Mitnehmer 14 durch Federkraft nach deren Freigabe ausgelöst wird. Diese Freigabe erfolgt auf geeignete Weise, z. B. durch Kurvensteuerung, über dem Tangentenpunkt bzw. Kreuzungspunkt zwischen der Bahn des Zubringerförderers 7 und der Kreisbahn 15 der Mitnehmer 14 . Letztere sind weiter an ihrem der Auflagefläche 16 zuweisenden Stirnbereich griffig, beispielsweise mit Nadeln oder Zähnen ausgestattet und um ihre Achse drehsteuerbar, was ebenfalls durch Kurvensteuerung geschehen kann. Im ersten Quadrant der von dem Mitnehmer 14 nach dessen Absenkung überlaufenen Auflagefläche 16 befindet sich ein Bearbeitungswerkzeug 17 zum Abtrennen des Schwanzes der Fische mit einem von unten durch die Auflagefläche 16 hindurchragenden, umlaufend angetriebenen Kreismesser 18 mit in bezug auf das Zentrum der Kreisbahn 15 radial verlaufender Achse 19 . Das Kreismesser 18 ist außerhalb der Kreisbahn 15 angeordnet und der Abstand seiner Schnittebene zu dieser durch ein geeignetes Stellglied in Abhängigkeit von dem durch den Winkelcodierer 12 ermittelten Meßwert einstellbar.

Im zweiten Quadrant der von dem Mitnehmer 14 überlaufenen Auflagefläche 16 befindet sich ein weiteres Bearbeitungswerkzeug 20 zum Abtrennen des Kopfes der Fische. Es besteht aus einem umlaufend angetriebenen, von unten durch die Auflagefläche 16 hindurchragenden Kreismesser 21 , welches gestellfest innerhalb der Kreisbahn 15 der Mitnehmer 14 angeordnet ist und eine in bezug auf das Zentrum der Kreisbahn 15 radial verlaufende Achse 22 aufweist.

Die Arbeitsweise der erfindungsgemäßen Anlage wird nachstehend anhand eines die Bearbeitung durchlaufenden Fisches beschrieben, der zu diesem Zweck in der Zuführrutsche 2 mit seinem Kopf voraus plaziert wird, während die Förderwalze 6 hochgeschwenkt ist. Der Fisch rutscht dabei der Schwerkraft folgend gegen die in Fangstellung befindlichen Fangklappen 3 , die ihn zurückhalten und zentrieren. Durch ein mit dem später wirksam werdenden Fördermittel 13 synchronisiertes Taktsignal werden nun die Fangklappen 3 geöffnet und gleichzeitig die über dem bereitstehenden Fisch befindliche Förderwalze 6 durch Absenken in Kontakt mit dem Fisch gebracht.

Dies hat zur Folge, daß dieser beschleunigt wird und in den Bereich des Zubringerförderers 7 gelangt, der den Fisch mit seinem Kettenförderer 8 übernimmt, wobei der Niederhalter 9 dafür sorgt, daß die Zähne des Kettenförderers 8 in formschlüssigen Eingriff mit dem Fisch kommen. Während seines Vorschubs durch den Zubringerförderer 7 wird durch den Fisch der Tasthebel 11 der Tasteinrichtung 10 ausgelenkt und durch den mit dem Tasthebel 11 verbundenen Winkelcodierer 12 das Fisch-Längsprofil "aufgezeichnet". Infolge einer gewissen Federbelastung des Tasthebels 11 ergibt sich dabei nach Übergleiten der Kopfstruktur ein Höhensprung dadurch, daß der Tasthebel 11 von der Hartstruktur des Kopfes in den Bereich der weichen Bauchhöhle gelangen. Die auf diese Weise gemessene Längenausdehnung der Kopfstruktur wird durch einen angeschlossenen Rechner dahingehend ausgewertet, daß die Geschwindigkeit des Kettenförderers 8 in Abhängigkeit von dem ermittelten Meßwert variiert wird. Die Abhängigkeit ist dabei so, daß ein großer Fisch eine Beschleunigung, ein kleiner Fisch eine Verzögerung bewirkt. Diese Variabilität hat zum Ziel, jeden Fisch dem nachfolgenden Fördermittel 13 so zu präsentieren, daß die Übernahme durch dessen Mitnehmer 14 jeweils an einem einheitlichen Bezugspunkt des Fischkörpers erfolgt, der sich aus der Position des fest angeordneten Köpfwerkzeuges 20 und einem damit auszuführenden ausbeutegünstigen Köpfschnitt ergibt.

Die Übernahme des Fisches von dem Zubringerförderer 7 erfolgt durch den Mitnehmer 14 des Fördermittels 13 , der über dem Tangentenpunkt bzw. Kreuzungspunkt zwischen der Bahn des Zubringerförderers 7 und der Kreisbahn 15 der Mitnehmer 14 auf den Fisch abgesenkt wird. Der Kontakt mit dem Fisch ist dabei formschlüssig, so daß eine sichere Mitnahme gewährleistet ist. Erfolgt die Übernahme des Fisches über dem genannten Tangentenpunkt, so wird der Fisch unmittelbar danach durch Verdrehen des Mitnehmers 14 um seine Längsachse gedreht, so daß der Fisch mit seinem Schwanz rechtzeitig vor Ankunft an dem Schwanzschnittwerkzeug 17 radial nach außen weist. Erfolgt dagegen die Übernahme des Fisches über dem genannten Kreuzungspunkt, so wird der Fisch querliegend weitergefördert, so daß das Schwanzschnittwerkzeug 17 ohne vorherige Drehung des Fisches wirksam werden kann. Dieses Werkzeug wurde vordem in eine Position gesteuert, die durch den Rechner anhand des von der Tasteinrichtung 10 ermittelten Meßwertes errechnet wurde, und die sicherstellt, daß der Schwanzschnitt an der gewünschten Stelle erfolgt. Nach Passieren des Schwanzschnittwerkzeuges 17 wird der Fisch durch erneute Drehung des Mitnehmers 14 in die Köpflage geschwenkt, wobei der Schnittwinkel zu seiner Längsachse so bestimmt ist, daß Ausbeute und Anatomie gleichermaßen günstig Berücksichtigung finden.

Nach der beschriebenen Bearbeitung kann die Mitnahme des Fisches durch den Mitnehmer 14 noch aufrechterhalten und damit ermöglicht werden, daß der Fisch durch entsprechende weitere Drehung des Mitnehmers 14 in eine bestimmte Endlage gebracht wird, in der er aus der Maschine entlassen wird. Dies kann im Falle einer eventuell nachgeschalteten Filetierbearbeitung mittels einer Filetiermaschine mit senkrecht verlaufender Arbeitsbahn eine Lage sein, bei der der Schwanzteil des Fisches vorausweist. Dieser kann dann über der im Bereich der Kreisbahn 15 angeordneten Beschickzone des Mitnehmers 14 freigegeben und damit im automatischen Betrieb weiterbearbeitet werden.

## Patentansprüche

1. Anlage zum Bearbeiten von Flachfischen, insbesondere zum Abtrennen des Kopfes, eventuell des Schwanzes und/oder Ausführen ähnlicher Arbeitsschritte, umfassend eine Beschickeinrichtung (1), Mittel zum Ausrichten der Fische in die jeweils erforderliche Bearbeitungslage sowie Mittel (13) zum Befördern der Fische in Seitenlage durch den Wirkbereich der entsprechenden Bearbeitungswerkzeuge (17, 20) hindurch, die längs der Bahn der Fördermittel (13) angeordnet sind, **dadurch gekennzeichnet**, daß die Fördermittel (13) zum Befördern der Fische durch den Wirkbereich der Bearbeitungswerkzeuge hindurch mindestens einen Mitnehmer (14) aufweisen, welcher jeweils mit dem zu bearbeitenden Fisch unter drehschlüssigem Angriff an seiner der Auflagefläche (16) gegenüberliegenden Flanke in Kontakt tritt, wobei jeder Mitnehmer (14) um eine zu der Auflagefläche (16) im wesentlichen senkrechte Achse drehsteuerbar und im Verhältnis zu der Auflagefläche (16) abstandssteuerbar ausgebildet ist.

2. Anlage nach Anspruch 1 , **dadurch gekennzeichnet**, daß jeder Mitnehmer (14) des Fördermittels (13) mit konstanter Geschwindigkeit auf einer Kreisbahn (15) geführt und an einem im Bereich der Beschickeinrichtung (1) befindlichen definierten Punkt der Kreisbahn (15) absenkbar ist.

3. Anlage nach Anspruch 1 oder 2 , bei der die Beschickeinrichtung (1) eine die zu bearbeitenden Fische aufnehmende und nach Längslage ausgerichtet bereitstellende Beschickstation mit Mitteln (4) zum getakteten Freigeben der Fische aus der Beschickstation umfaßt, **dadurch gekennzeichnet**, daß sich an die Beschickeinrichtung (1) ein Zubringerförderer (7) anschließt, der die im Takt zum Umlauf der Mitnehmer (14) freigegebenen Fische in Längsrichtung formschlüssig fördernd übernimmt und dessen Förderbahn zu der Kreisbahn (15) der Mitnehmer (14) des Fördermittels (13) tangential verläuft.

4. Anlage nach Anspruch 1 oder 2 , bei der die Beschickeinrichtung (1) eine die zu bearbeitenden Fische aufnehmende und nach Längslage ausgerichtet bereitstellende Beschickstation mit Mitteln (4) zum getakteten Freigeben der Fische aus der Beschickstation umfaßt, **dadurch gekennzeichnet**, daß sich an die Beschickeinrichtung (1) ein Zubringerförderer (7) anschließt, der die im Takt zum Umlauf der Mitnehmer (14) freigegebenen Fische in Längsrichtung formschlüssig fördernd übernimmt und dessen Förderbahn zu der Kreisbahn (15) der Mitnehmer (14) des Fördermittels (13) radial verläuft.

5. Anlage nach Anspruch 3 oder 4 , **dadurch gekennzeichnet**, daß im Bereich des Zubringerförderers (7) eine Tasteinrichtung (10) zum Ertasten eines markanten Längenmaßes des von dem Zubringerförderer (7) erfaßten Fisches vorgesehen ist, und daß die Geschwindigkeit des Zubringerförderers (7) in Abhängigkeit von dem durch die Tasteinrichtung (10) jeweils ermittelten Meßwert regelbar ist in dem Sinne, daß jeder Fisch unabhängig von seiner Größe an einem für die vorgesehene Bearbeitung einheitlichen Bezugspunkt seines Körpers durch den sich in die Bahn der Fische absenkenden Mitnehmer (14) erfaßbar ist.

6. Anlage nach einem der Ansprüche 1 , 2 , 3 , 5 ,
**dadurch gekennzeichnet**, daß die Absenkung der Mitnehmer (14) auf den Fisch an dem Tangentenpunkt zwischen der Bahn des Zubringerförderers (7) und der der Mitnehmer (14) erfolgt.

7. Anlage nach einem der Ansprüche 1 , 2 , 4 , 5 ,
**dadurch gekennzeichnet**, daß die Absenkung der Mitnehmer (14) auf den Fisch an dem Kreuzungspunkt zwischen der Bahn des Zubringerförderers (7) und der der Mitnehmer (14) erfolgt.

8. Anlage nach einem der Ansprüche 1 bis 5 ,
**dadurch gekennzeichnet**, daß der Drehwinkel der Mitnehmer (14) während seines formschlüssigen Angriffs am Fisch steuerbar ist.

9. Anlage nach einem der Ansprüche 1 bis 6 ,
**dadurch gekennzeichnet**, daß das Bearbeitungswerkzeug (20) zum Abtrennen des Kopfes gestellfest und neben der Bahn der Mitnehmer (14) angeordnet ist.

10. Anlage nach einem der Ansprüche 1 bis 7 ,
**dadurch gekennzeichnet**, daß das Bearbeitungswerkzeug (17) zum Abtrennen des Schwanzes jeweils unter Verwertung des von der Tasteinrichtung (10) ermittelten Meßwertes bezüglich seines Abstandes zu der Bahn der Mitnehmer (14) steuerbar ist.

## Claims

1. Plant for the processing of flatfish, especially for separation of the head, possibly of the tail, and/or carrying out of similar working steps, comprising a loading device (1), means for the aligning of the fish in the respectively required processing position as well as means (13) for the conveying of the fish in side position through the effective range of the corresponding processing tools (17, 20), which are arranged along the path of the conveying means (13), characterised thereby that the conveying means (13) for the conveying of the fish through the effective range of the processing tools comprises at least one entrainer (14), which gets into contact each time with the fish to be processed under rotationally locking engagement at its flank opposite the support surface (16), wherein each entrainer (14) is rotationally controllable about an axis substantially perpendicular to the support surface (16) and is constructed to be controllable in spacing in relation to the support surface (16).

2. Plant according to claim 1, characterised thereby that each entrainer (14) of the conveying means (13) is guided on a circular path (15) at constant speed and is lowerable at a defined point, which is disposed in the region of the loading device (1), of the circular path (15).

3. Plant according to claim 1 or 2, in which the loading device (1) comprises a loading station, which receives the fish to be processed and gets them ready aligned according to longitudinal position, with means (4) for the cyclic release of the fish from the loading station, characterised thereby that connected to the loading device (1) is a delivery conveyor (7) which takes over the fish, which have been released in synchronism with the circulation of the entrainers (14), by shape-locking conveying in longitudinal direction and the conveying path of which extends tangentially to the circular path (15) of the entrainers (14) of the conveying means (13).

4. Plant according to claim 1 or 2, in which the loading device (1) comprises a loading station, which receives the fish to be processed and gets them ready aligned according to longitudinal position, with means (4) for the cyclic release of the fish from the loading station, characterised thereby that connected to the loading device (1) is a delivery conveyor (7) which takes over the fish, which have been released in synchronism with the circulation of the entrainers (14), by shape-locking conveying in longitudinal direction and the conveying path of which extends radially to the circular path (15) of the entrainers (14) of the conveying means (13).

5. Plant according to claim 3 or 4, characterised thereby that a feeler device (10) for the detection of a prominent length dimension of the fish gripped by the delivery conveyor (7) is provided in the region of the delivery conveyor (7) and that the speed of the delivery conveyor (7) is regulable in dependence on the measurement value, which has been detected each time by the feeler device (10), in the sense that each fish is engageable in dependence on its size by the entrainers (14), which lower into the path of the fish, at a reference point of its body which is standard for the envisaged processing.

6. Plant according to one of claims 1, 2, 3, 5, characterised thereby that the lowering of the entrainers (14) onto the fish takes place at the point of tangency between the path of the delivery conveyor (7) and that of the entrainers (14).

7. Plant according to one of claims 1, 2, 4, 5, characterised thereby that the lowering of the entrainers (14) onto the fish takes place at the point of intersection between the path of the delivery conveyor (7) and that of the entrainers (14).

8. Plant according to one of claims 1 to 5, characterised thereby that the rotational angle of the entrainers (14) during its shape-locking engagement at the fish is controllable.

9. Plant according to one of claims 1 to 6, characterised thereby that the processing tool (20) for the severing of the head is arranged to be fixed to the structure and adjacent to the path of the entrainers (14).

10. Plant according to one of claims 1 to 7, characterised thereby that the processing tool (17) for the severing of the tail is controllable with respect to its spacing relative to the path of the entrainer (14) under evaluation each time of the measurement value detected by the feeler device (10).

## Revendications

1. Installation de traitement de poissons plats, notamment destinée à détacher la tête, éventuellement la queue, et/ou destinée à exécuter des opérations de travail similaires, comprenant un dispositif de chargement (1), des moyens destinés à orienter les poissons dans chacune des positions de traitement nécessaires, ainsi que des moyens (13) destinés à transporter le poisson en position sur le côté, à travers la zone d'action des outils de traitement (7, 20) correspondants, qui sont agencés le long de la trajectoire des moyens de transport (13), caractérisée en ce que les moyens de transport (13) destinés à transporter les poissons à travers la zone d'action des outils de traitement, présentent au moins un entraîneur (14), qui entre en contact avec le poisson à traiter en réalisant une prise en rotation, à son flanc opposé à la surface d'appui (16), chaque entraîneur (14) étant constitué de manière à pouvoir être commandé en rotation autour d'un axe sensiblement perpendiculaire à la surface d'appui (16), et de façon à ce que sa distance par rapport à la surface d'appui (16) puisse également être commandée.

2. Installation selon la revendication 1, caractérisée en ce que chaque entraîneur (14) du moyen de transport (13) est guidé avec une vitesse constante sur une trajectoire circulaire (15), et peut être abaissé à un point défini de la trajectoire circulaire (15), se trouvant dans la zone du dispositif de chargement (1).

3. Installation selon la revendication 1 ou 2, dans laquelle le dispositif de chargement (1) comprend un poste de chargement accueillant les poissons à traiter et les mettant à disposition en étant orientés selon leur position longitudinale, ainsi que des moyens (4) destinés à libérer les poissons, de manière cyclique, hors du poste de chargement, caractérisée en ce qu'au dispositif de chargement (1) se raccorde un transporteur d'amenée (7), qui prend en charge les poissons libérés en cadence avec le mouvement de révolution des entraîneurs (14), et les transporte dans la direction longitudinale, par entraînement par complémentarité de forme, la trajectoire de ce transporteur d'amenée s'étendant tangentiellement à la trajectoire circulaire (15) des entraîneurs (14) du moyen de transport (13).

4. Installation selon la revendication 1 ou 2, dans laquelle le dispositif de chargement (1) comprend un poste de chargement accueillant les poissons à traiter et les mettant à disposition en étant orientés selon leur position longitudinale, ainsi que des moyens (4) destinés à libérer les poissons, de manière cyclique, hors du poste de chargement, caractérisée en ce qu'au dispositif de chargement (1) se raccorde un transporteur d'amenée (7), qui prend en charge les poissons libérés en cadence avec le mouvement de révolution des entraîneurs (14), et les transporte dans la direction longitudinale, par entraînement par complémentarité de forme, la trajectoire de ce transporteur d'amenée s'étendant radialement à la trajectoire circulaire (15) des entraîneurs (14) du moyen de transport (13).

5. Installation selon la revendication 3 ou 4, caractérisée en ce que dans la zone du transporteur d'amenée (7) est prévu un dispositif à palpeur (10) pour relever une mesure de longueur caractéristique du poisson saisi par le transporteur d'amenée (7), et en ce que la vitesse du transporteur d'amenée (7) peut être réglée en fonction de la valeur de mesure déterminée dans chaque cas par le dispositif à palpeur (10), de manière telle, que chaque poisson, indépendamment de sa taille, peut être saisi par l'entraîneur (14) s'abaissant dans la trajectoire des poissons, en un point de référence de son corps, uniforme pour le traitement prévu.

6. Installation selon l'une des revendications 1, 2, 3, 5, caractérisée en ce que l'abaissement des entraîneurs (14) sur le poisson, s'effectue au point de tangence entre la trajectoire du transporteur d'amenée (7) et celle des entraîneurs (14).

7. Installation selon l'une des revendications 1, 2, 4, 5, caractérisée en ce que l'abaissement des entraîneurs (14) sur le poisson, s'effectue au point d'intersection entre la trajectoire du transporteur d'amenée (7) et celle des entraîneurs (14).

8. Installation selon l'une des revendications 1 à 5, caractérisée en ce qu'il est possible de commander l'angle de rotation des entraîneurs (14), lorsqu'ils sont en prise par complémentarité de forme, avec le poisson.

9. Installation selon l'une des revendications 1 à 6, caractérisée en ce que l'outil de traitement (20) destiné à détacher la tête, est monté de manière fixe sur le bâti, et est disposé à côté de la trajectoire des entraîneurs (14).

10. Installation selon l'une des revendications 1 à 7, caractérisée en ce que l'outil de traitement (17) destiné à détacher la queue, peut être commandé, quant à sa distance par rapport à la trajectoire des entraîneurs (14), en exploitant à chaque fois la valeur de mesure détectée par le dispositif à palpeur (10).
